# EUROPEAN PATENT APPLICATION

(11) **EP 2 383 068 A1**
(43) Date of publication of application: **02.11.2011**
(21) Application number: 10733533.3
(22) Date of filing: 21.01.2010
(51) Int. Cl.: B23K 26/20, B23K 26/42

(54) **LASER WELDING APPARATUS AND METHOD OF LASER WELDING**

(30) Priority: 23.01.2009 JP 2009013488
(71) Applicant: Mitsubishi Heavy Industries, Ltd., Tokyo 108-8215 (JP)
(72) Inventor: TSUBOTA, Shuho, Takasago-shi Hyogo 676-8686 (JP); TERADA, Shin, Nagasaki-shi Nagasaki 851-0392 (JP); KOGA, Hiroshi, Nagasaki-shi Nagasaki 850-8610 (JP); GODA, Hozumi, Nagasaki-shi Nagasaki 850-8610 (JP); HAYANO, Yuta, Nagasaki-shi Nagasaki 850-8610 (JP)
(74) Representative: Henkel, Breuer & Partner
(86) International application number: PCT/JP2010/050732
(87) International publication number: WO 2010/084926

(57) **Abstract**

To prevent poor quality of weld in a welding process for a thick material or for welding a gap, the laser welding apparatus has granular flux (3) supplied to a side of the base material (W) opposite to the side where a laser beam is directed and a pressing member (5) that presses the granular flux onto the base material (W) upon receiving fluid therein. Either the flux prevents the laser beam that coming through the base material (W) from penetrating the flux or the thickness of molten flux is selected so that the laser beam coming through the base material (W) does not penetrate the molten flux.

## Description

### {Technical Field}

The present invention relates to a laser welding apparatus and a laser welding method suitable for use in welding large members for ships, bridges, and so on, and in particular, in welding where weld lengths are as long as several tens of meters.

### {Background Art}

Conventionally, arc welding has been employed for welding large members for ships, bridges, and so on.
When large members are welded by arc welding, deformation occurs in the members due to weld heat input, and the task of correcting these deformations is absolutely essential.

It is known that welding using a high energy beam from a laser or the like (hereinafter expressed as laser welding) is effective as a method for controlling the occurrence of such deformation of members due to welding.
However, this welding method has a problem in that it requires high member alignment precision because it uses a beam focused to a small diameter.
For example, the gap needs to be within about 0.2 mm.

In welding work for ships, bridges, and so on, large members whose weld lines range from several meters to several tens of meters are to be welded, and thus, it is necessary to allow for a gap of at least about 1 mm.
Alternatively, it is necessary to keep the gap within about 0.2 mm by performing preprocessing, such as machining, on large members, followed by welding work.

If a gap is present, the laser beam passes through the gap during the laser welding described above, which makes it impossible to form a bead. Therefore, a measure for merging the gap by supplying a filler into the gap by adding a filler or in conjunction with arc welding is proposed (for example, see Patent Literature 1).

### {Citation List}

### {Patent Literature}

{PTL} Japanese Unexamined Patent Application, Publication No. 2006-224130

### {Summary of Invention}

### {Technical Problem}

However, the measure described above still has a problem in that in the case where the gap is large or the plate thicknesses of the objects to be welded are increased, molten metal drips, causing a reverse side bead, that is, a penetration bead, to excessively protrude into a convex shape and a front surface bead to form a concave shape.

On the other hand, the dripping of molten metal can be prevented by using a mechanism for holding a penetration bead in arc welding. Known examples of the mechanism for holding a penetration bead include a mechanism using a gas, a mechanism using a metal plate, a mechanism using a ceramic block, a mechanism using glass cloth, and a mechanism using particulate flux.

However, the mechanism using a gas has a problem in that the molten metal holding strength is insufficient in the case where a gap is present between the members.

The mechanism using a metal plate has a problem in that a hazardous component may be mixed in the molten metal, making it necessary to remove the metal plate and so on after the welding work. Further, it has a problem in that it is difficult to bring the metal plate into close contact with the objects to be welded. It also has a problem in that it is necessary to enhance the laser beam penetration power, which requires a welding apparatus with larger output.

The mechanism using a ceramic block has problems in that the ceramic evaporates due to the penetrating laser beam, causing a defect in the shape of the reverse side bead and detrimental defects, such as blowholes and cracks, in the weld metal due to blow back.

The mechanism using glass cloth has a problem in that the glass cloth is cut by the penetrating laser beam, causing insufficient holding of the penetration bead. It also has a problem in that gas generated when the glass cloth is cut is mixed into the molten metal, causing defects.

The mechanism using particulate flux has a problem in that when a penetrating laser beam falls directly onto the particulate flux, gas generated from the particulate flux causes defects, such as blowholes or porosities. It also has the problem of causing defects in which slag generated from the flux is included in the weld metal.

An example of a welding method using particulate flux includes a welding method using a mechanism in which backing flux, sand (underlay flux), and a hose are layered in this order (an FB method or an RF method), which uses backing flux coated with thermosetting resin. Therefore, this method has a problem in that when the backing flux is directly exposed to a penetrating laser beam, gas is generated from the flux and the thermosetting resin, causing the defects described above.

On the other hand, a welding method (FCB method) using a mechanism in which backing flux, a copper plate, and a hose are layered in this order from the side of the objects to be welded can suppress the occurrence of defects due to the generated gas described above because the backing flux contains no or little thermosetting resin that generates gas.

With the above configuration, the backing flux is brought into close contact with the objects to be welded by supporting the backing flux with the copper plate and pushing up the backing flux and the copper plate. During welding, the weld metal is held by the flux and the copper plate. Therefore, welding large components having a long weld line has the problem of a difficulty in pressing the backing flux and the copper plate uniformly along the entire length of the weld line.
Furthermore, the copper plate is sometimes deformed due to heat caused by welding, thus posing the problem of difficulty in handling.

The present invention is made to solve the above problems, and it is an object thereof to provide a laser welding apparatus and a laser welding method in which degradation in the quality of a welded portion can be prevented for welding thick-walled materials or a gap portion.

### {Solution to Problem}

To achieve the above object, the present invention provides the following solutions.
A laser welding apparatus according to a first aspect of the present invention includes a particulate flux that is pressed against a first side of objects to be welded, which a laser beam irradiates from a second side; and a pushing section that expands by receiving a fluid supplied to push the flux toward the first side of the objects to be welded, wherein the laser beam that has penetrated the objects to be welded dose not pass through the flux.

According to the first aspect of the present invention, even if the laser beam irradiating the objects to be welded penetrates the objects to be welded W to fall directly on the flux, melting of the flux can be controlled, and the amount of gas generated from the flux and so on can be controlled.
That is, since the penetrating laser beam is prevented from passing through the flux, the amount of flux heated by the laser beam can be controlled, as compared with a case where the laser beam penetrates the flux. This can therefore control the amount of flux melted when heated, which controls the amount of flux that generates gas, thereby controlling the amount of gas generated.
Furthermore, occurrence of a defect in which slag generated from the flux is included in the weld metal can be controlled.

On the other hand, since the particulate flux and the pushing section that expands when supplied with fluid are used, the flux can be uniformly pushed against the objects to be welded even if the weld line is long.

Furthermore, since the objects to be welded are welded by irradiating with a laser beam, the quantity of heat applied to the objects to be welded can be controlled, as compared with arc welding and so on. This can therefore control generation of thermal deformation of the objects to be welded.

Furthermore, since the objects to be welded are welded, with the flux pushed against the first side, the objects to be welded that is melted by the laser beam (that is, molten metal) are caught by the flux even if the plate thicknesses of the objects to be welded are large, thereby preventing it from dripping downward and the penetration bead from becoming an excessively convex shape.
Even in the case where the gap portion present between the objects to be welded is welded, the molten metal is caught by the flux, thus allowing welding while adding a filler.

In the first aspect of the present invention, preferably, the flux does not contain thermosetting resin or contain the thermosetting resin at less than or equal to about 2 wt%.

With this configuration, since the amount of thermosetting resin contained in the flux is small, the amount of gas generated from the flux when heated can be controlled.
That is, since the content of thermosetting resin that generates gas when heated is low, the amount of gas generated from the entire flux can be controlled.

In the first aspect of the present invention, preferably, the flux contains thermosetting resin that has already been made to generate gas in advance.

With this configuration, the use of thermosetting resin from which gas is previously generated allows the amount of gas generated from the flux to be controlled even if the flux is heated during welding.
An example of the method for previously generating gas is a method of heating the thermosetting resin.

In the first aspect of the present invention, it is preferable to have a guiding section that guides gas generated from the flux heated by the heat of the laser beam to an unheated region of the flux.

With this configuration, gas generated from the heated flux is guided to the unheated region of the flux through the guiding section. Since the unheated flux serves as an escape route of the gas, thus suppressing occurrence of problems, such as blowholes.

In the first aspect of the present invention, it is preferable to have a shielding section, between the pushing section and the flux, that blocks the laser beam.

This configuration can prevent the pushing section from being irradiated with the laser beam while reducing the amount of flux.
In particular, if a driving unit or the like that moves the laser beam and the objects to be welded relative to each other fails, the laser beam may continue to irradiate the same portion. In such a case, this configuration can prevent the laser beam that has penetrated the objects to be welded and the flux from irradiating the pushing section.

In the first aspect of the present invention, it is preferable to have a supporting section, between the pushing section and the flux, that is a group of particulate substances and that supports the backing flux.

This configuration allows the flux to be supported with stability and to be uniformly pressed against the objects to be welded by the supporting section. In particular, this can make it easier to uniformly press the flux against the objects to be welded even if the weld line is long, as compared with the method of supporting the flux with a metal plate.

A laser welding method according to a second aspect of the present invention includes a placement step of placing objects to be welded on the laser welding apparatus according to any of Claims 1 to 6; a pressing step of pressing the flux against the objects to be welded by supplying fluid to the pressing section; and a welding step of welding the objects to be welded by radiating a laser beam thereto.

According to the second aspect of the present invention, since laser welding is performed using the laser welding apparatus of the present invention described above, deterioration of the quality of the welded portion can be prevented even for welding thick-walled materials or a gap portion.

A laser welding method according to a third aspect of the present invention includes a placement step of placing objects to be welded on a particulate flux; a pressing step of pressing the flux against the objects to be welded; and a welding step of performing welding while controlling melting of the flux due to the laser beam that has penetrated the objects to be welded when the laser beam irradiates the objects to be welded.

According to the third aspect of the present invention, since welding is performed while controlling melting of the flux by the laser beam that has penetrated the objects to be welded, even for welding thick-walled materials or a gap portion.

### {Advantageous Effect of the Invention}

With the laser welding apparatus and the laser welding method of the present invention, even in the case where a laser beam irradiating the objects to be welded falls directly onto the flux penetrating the objects to be welded, the amount of gas generated from the flux and so on can be controlled, thus offering the advantage of preventing the deterioration of the quality of the welded portion.
Furthermore, since the objects to be welded are welded, with the flux pushed thereagainst, the objects to be welded that are melted by the laser beam (that is, molten metal) are caught by the flux even if the plate thicknesses of the objects to be welded are large, thereby preventing it from dripping downward and the penetration bead from becoming an excessively convex shape. Therefore, this offers the advantage of preventing the deterioration of the quality of the welded portion.

### {Brief Description of Drawings}

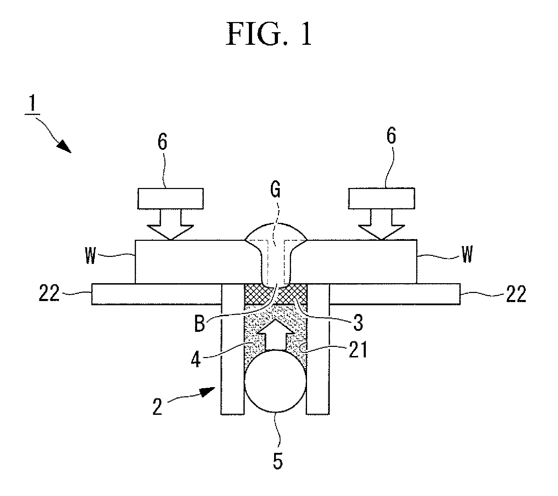

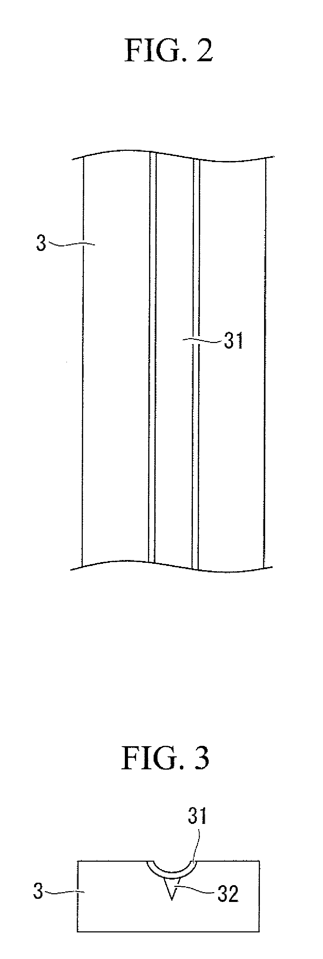

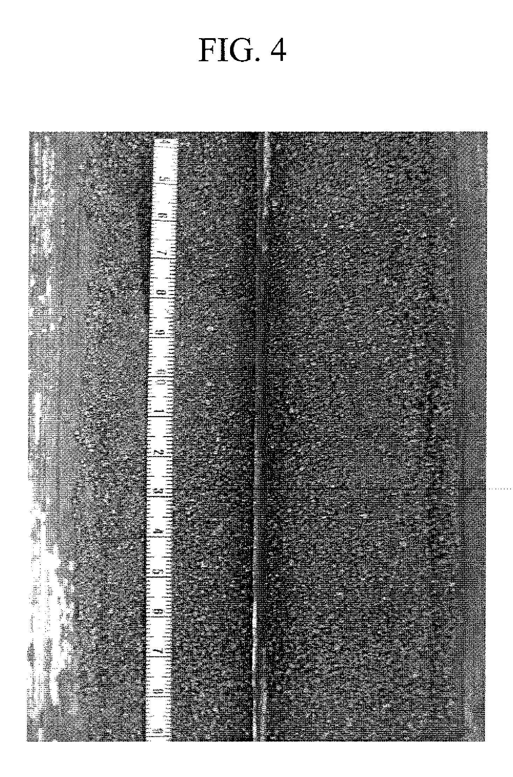

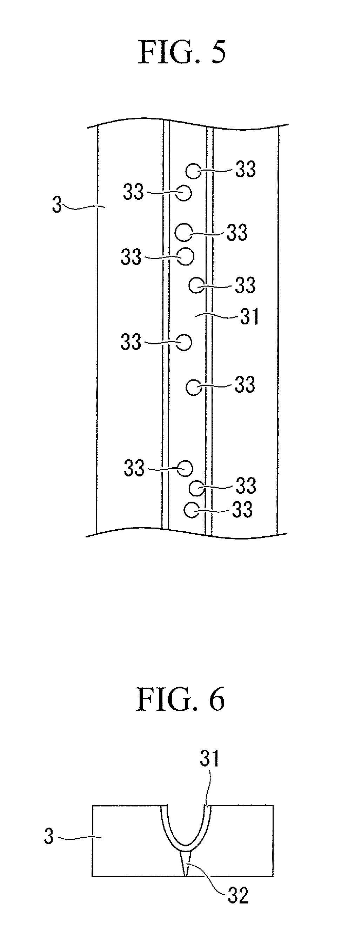

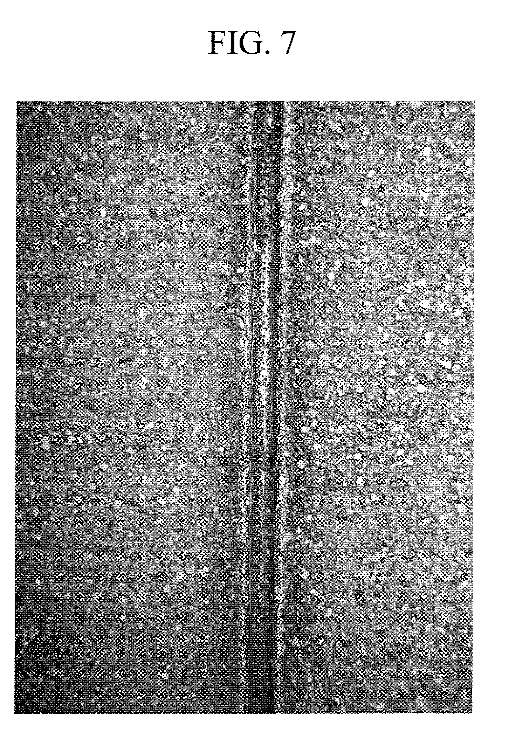

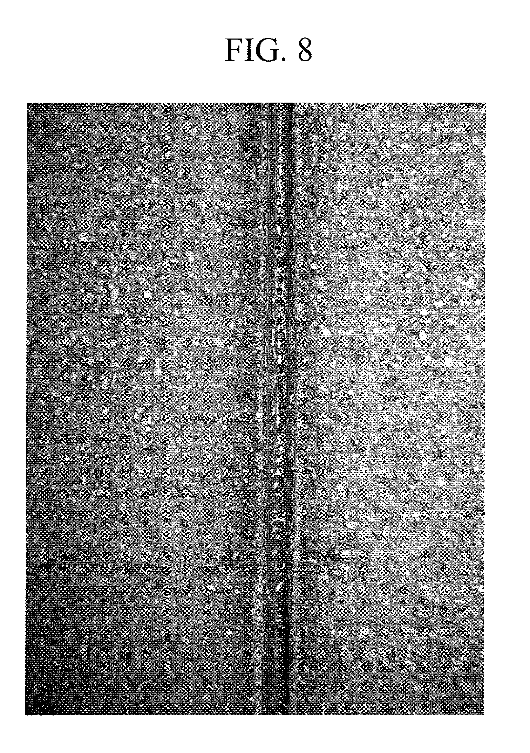

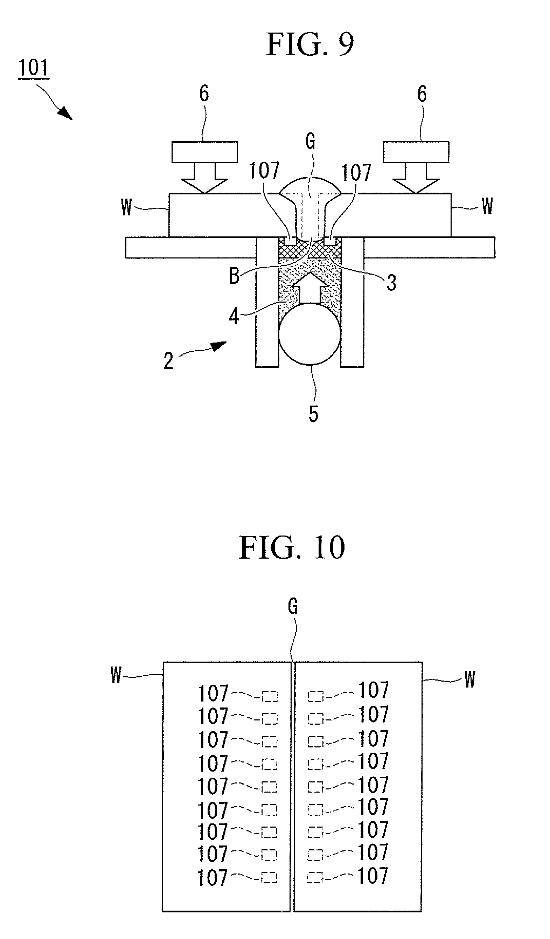

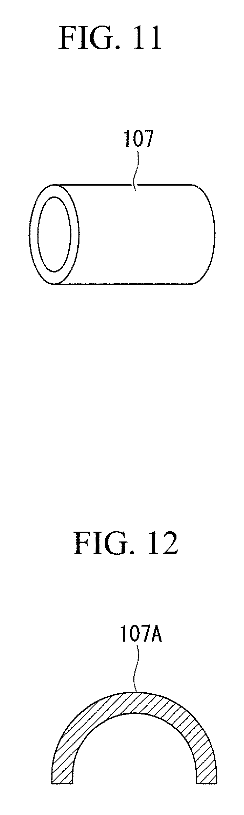

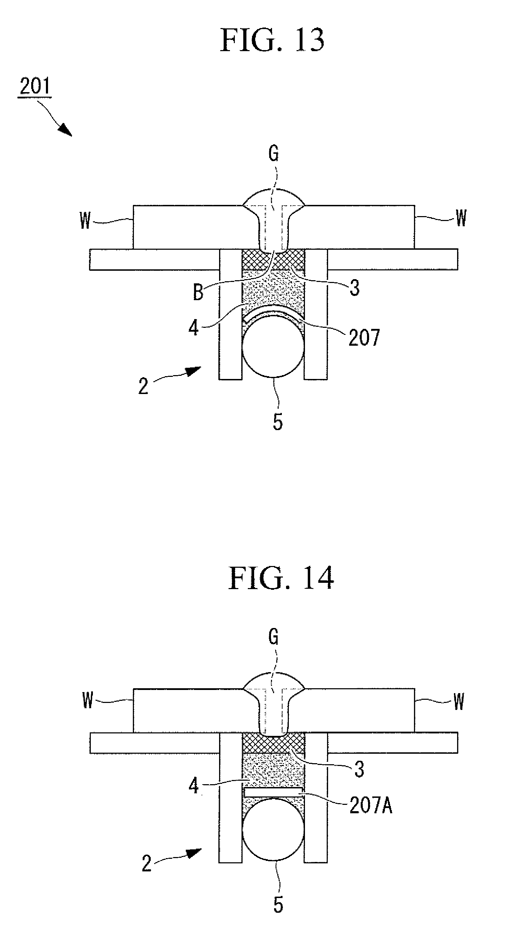

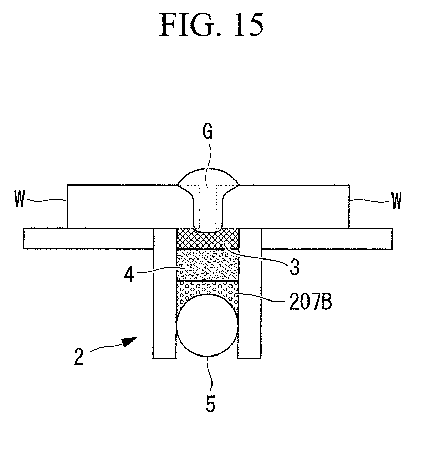

{Fig. 1} Fig. 1 is a schematic diagram illustrating the configuration of a penetration-bead holding apparatus according to a first embodiment of the present invention.
{Fig. 2} Fig. 2 is a schematic diagram illustrating the state of a flux through which a laser beam has not passed.
{Fig. 3} Fig. 3 is a cross-sectional view illustrating the state of the flux in Fig. 2.
{Fig. 4} Fig. 4 is a picture showing the state of the flux through which a laser beam has not passed.
{Fig. 5} Fig. 5 is a schematic diagram illustrating the state of the flux through which a laser beam has passed.
{Fig. 6} Fig. 6 is a cross sectional view illustrating the state of the flux in Fig. 5.
{Fig. 7} Fig. 7 is a picture showing the state of the flux through which a laser beam has passed.
{Fig. 8} Fig. 8 is a picture showing the state of the flux through which a laser beam has passed.
{Fig. 9} Fig. 9 is a schematic diagram illustrating the configuration of a penetration-bead holding apparatus of a second embodiment of the present invention.
{Fig. 10} Fig. 10 is a schematic diagram illustrating the placement positions of spacers in Fig. 9.
{Fig. 11} Fig. 11 is a schematic diagram illustrating the configuration of the spacers in Fig. 9.
{Fig. 12} Fig. 12 is a schematic diagram illustrating another embodiment of the spacer in Fig. 11.
{Fig. 13} Fig. 13 is a schematic diagram illustrating the configuration of a penetration-bead holding apparatus of a third embodiment of the present invention.
{Fig. 14} Fig. 14 is a schematic diagram illustrating another example of the penetration-bead holding apparatus in Fig. 13.
{Fig. 15} Fig. 15 is a schematic diagram illustrating yet another example of the penetration-bead holding apparatus in Fig. 13.

### {Description of Embodiments}

### {First Embodiment}

A penetration-bead holding apparatus for use in laser welding according to a first embodiment of the present invention will be described with reference to Figs. 1 to 8.
Fig. 1 is a schematic diagram illustrating the configuration of the penetration-bead holding apparatus according to this embodiment.
A penetration-bead holding apparatus (laser welding apparatus) 1 of this embodiment is used to hold a penetration bead B while welding objects to be welded W, which are large structural components of ships and so on, through the use of a laser. For example, it is used to weld the objects to be welded W having a gap G, as shown in Fig. 1.

As shown in Fig. 1, the penetration-bead holding apparatus 1 is provided with a housing 2, flux 3, under-sand (supporting section) 4, and a hose (pushing section) 5.

As shown in Fig. 1, the housing 2 supports the flux 3, the under-sand 4, and the hose 5 and is disposed in contact with the objects to be welded W during welding.
The housing 2 is provided with a groove 21 extending along the gap G between the objects to be welded W (in the direction perpendicular to the plane of Fig. 1) and a flange 22 extending from the open ends of the groove 21 along the objects to be welded W.

As shown in Fig. 1, the groove 21 accommodates therein the flux 3, the under-sand 4, and the hose 5.
The flange 22 is a portion that is brought into contact with the objects to be welded W when the penetration-bead holding apparatus 1 is disposed on the objects to be welded W.

As shown in Fig. 1, the flux 3 is disposed in a position facing the gap G between the objects to be welded W and comes into contact with dripping molten metal during welding. The flux 3 is formed in a particulate form and is disposed to form a layer in the groove 21.

Examples of the thickness of the layer formed of the flux 3 are within the range from about 2 mm to about 50 mm, and more preferably, within the range from about 5 mm to about 20 mm.
For example, in the case where the plate thicknesses of the objects to be welded W are small, the thickness of the layer of the flux 3 can be reduced, and in the case where the plate thicknesses of the objects to be welded W are large, the thickness of the layer of the flux 3 needs to be increased.

In other words, it is preferable to adjust the thickness of the layer of the flux 3 depending on the materials of the objects to be welded W, the output of the laser beam which is set on the basis of the plate thickness and the amount by which a laser beam penetrates the objects to be welded W.
That is, since the flux 3 is replaced every welding and cannot be reused, increasing the thickness of the layer of the flux 3 more than is necessary will increase the time and labor required to replace the flux 3 and increase an unreusable flux 3. Thus, it is preferable to adjust the thickness of the layer of the flux 3 as appropriate.

Examples of the flux 3 include fluxes containing SiO₂ as the main component (for example, fluxes containing about 30 wt% to 50 wt%) with which MgO, ZrO₂, CaF₂, TiO₂, Ai₂O₃, CaO, or the like is mixed.
Thus, it is preferable to use the flux 3 whose slag viscosity, release property, and melting point are adjusted by containing MgO or the like in SiO₂.

Furthermore, although this embodiment is described when applied to an example in which the flux 3 is not coated with thermosetting resin, the surface of the particulate flux 3 may be coated with thermosetting resin; it is not particularly so limited.

In the case where the flux 3 is coated with thermosetting resin, it is preferable that the flux 3 contain thermosetting resin of less than or equal to about 2 wt%.

This can control the amount of gas generated from the flux 3 when heated. That is, since the content of thermosetting resin that generates gas when heated is low, the amount of gas generated from the entire flux 3 can be controlled. This can prevent generation of blowholes due to the gas described above.

A known resin such as a crosslinked resin or a formaldehyde resin can be used as the thermosetting resin; it is not particularly limited.

As shown in Fig. 1, the under-sand 4 is disposed between the flux 3 and the hose 5 and supports the flux 3.
The under-sand 4 may be a known one and is not particularly limited.

The use of the under-sand 4 in this way allows the flux 3 to be supported stably and to be uniformly pressed against the objects to be welded W. In particular, this can make it easier to uniformly press the flux 3 against the objects to be welded W even if the weld line is long, as compared with the method of supporting the flux 3 with a metal plate, such as a copper plate.

As shown in Fig. 1, the hose 5 supports the flux 3 and the under-sand 4 and presses the flux 3 against the objects to be welded W by expanding by receiving a supply of fluid, such as a pressurized gas.
For example, in the case where compressed air is used as the fluid, examples of the pressure of fluid supplied to the hose 5 are within the range from about 19.6 kPa to about 196 kPa (about 0.2 kgf/cm² to about 2.0 kgf/cm²), and more preferably, within the range from about 49 kPa to about 98 kPa (about 0.5 kgf/cm² to about 1.0 kgf/cm²).

In the case where the pressure of fluid supplied is too high, a force by which the flux 3 is pressed against the objects to be welded W becomes excessively strong to form the penetration bead B formed during welding into a concave shape. Furthermore, the gas generated from the flux 3 loses an escape route, which easily causes defects, such as blowholes.
In contrast, in the case where the pressure is low, the penetration bead B formed during welding cannot be prevented from being formed in an excessively convex form.

The hose 5 may be a known one and is not particularly limited.

Furthermore, as shown in Fig. 1, reactive-force applying sections 6 are provided such that they sandwich the objects to be welded W with the penetration-bead holding apparatus 1.
The reactive-force applying sections 6 generate a reactive force against the force generated by the hose 5 and pressing the flux 3 against the objects to be welded W. By providing the reactive-force applying sections 6, deformation and movement of the objects to be welded W due to welding can be suppressed.

Examples of the configuration of the reactive-force applying sections 6 include a configuration in which magnets attracted to the surfaces of the objects to be welded W on which a laser beam is incident (front surfaces) and the surfaces with which the penetration-bead holding apparatus 1 is brought into contact (back surfaces) are provided, with which a reactive force is applied to the objects to be welded W; a configuration in which a reactive force is applied by placing a heavy object on the front surfaces; and a configuration having a mechanism for pressing the front surfaces.

Next, laser welding using the above-configured penetration-bead holding apparatus 1 will be described.
To perform laser welding of the objects to be welded W, first, the objects to be welded W are disposed at a predetermined position, as shown in Fig. 1.

Thereafter, the hose 5 is placed in the groove 21, and the penetration-bead holding apparatus 1 filled with the under-sand 4 and the flux 3 is brought into contact with the objects to be welded W (placement step).
Specifically, the penetration-bead holding apparatus 1 is placed such that the flux 3 is pressed along the gap G serving as a weld line.

When the penetration-bead holding apparatus 1 is placed at the predetermined position, a predetermined-pressure fluid is supplied to the hose 5, so that the flux 3 is pressed against the objects to be welded W (pressing step).
That is, the hose 5 expands when the predetermined-pressure fluid is supplied to push up the under-sand 4 and the flux 3 toward the objects to be welded W. Thus, the flux 3 is pressed against the objects to be welded.

At that time, at the same time or before the predetermined-pressure fluid is supplied to the hose 5, the reactive force described above is applied from the reactive-force applying section 6 to the objects to be welded W.
Here, the reactive force indicates a force against a force with which the flux 3 is pressed against the objects to be welded W.

A laser beam irradiates the objects to be welded W to weld the objects to be welded W (welding step). At that time, the objects to be welded W irradiated with the laser beam melt into a high-temperature molten metal and fill the gap G.

Furthermore, in the case where the gap G has a large width, so that it is difficult to perform welding whereby the gap is sufficiently filled only by the objects to be welded W, a filler is used. That is, the gap G is filled by melting the filler, for example, by irradiating with a laser beam or employing arc welding in combination therewith in the vicinity of the gap G.

At that time, the flux 3 located in the vicinity of the gap G melts due to the heat of the molten metal and so on and irradiation with a laser beam that has passed through the gap G and a laser beam that has penetrated the molten metal of the objects to be welded W and so on.

Therefore, the molten metal that has dripped from the gap G is caught by the melted flux 3. The molten metal caught by the flux 3 is solidified with cooling to form the penetration bead B.
A slag layer formed from the flux 3 is formed on the surface of the thus-formed penetration bead B.

On the other hand, a laser beam to irradiate the objects to be welded W is adjusted to an output at which it enters the flux 3 to a depth from about 1 mm to about 15 mm. In the case where setting of the inclination angle of the laser and arc welding are used in combination with the output setting, the melted flux thickness is set to the order of 15 mm or less by adjusting the distance between the laser beam and the arc.
In other words, the quantity of heat input by the laser beam is controlled so as to be proportional to the plate thicknesses of the objects to be welded W.

Here, a state in which a laser beam has not passed through the layer of the flux 3 and a state in which it has passed therethrough (or an excessively melted state) will be described below. First, the state of a layer of the flux 3 which a laser beam has not passed through is described, after which the state after a laser beam has passed therethrough will be described.
Fig. 2 is a schematic diagram illustrating the state of the flux through which the laser beam has not passed. Fig. 3 is a cross-sectional view illustrating the state of the flux in Fig. 2. Fig. 4 is a picture showing the state of the flux through which the laser beam has not passed.

As shown in Figs. 2 and 3, solidified slag 31 is formed on the molten metal of the flux 3 through which the laser beam has not passed, in other words, in a region that is in contact with the penetration bead B.
As shown in Figs. 2 and 4, the solidified slag 31 does not contain bubbles 33, which are formed in the flux 3 through which the laser beam has passed. Furthermore, the depth of the recess in the solidified slag 31 is a desired depth. In other words, the recess has a depth at which the penetration bead B can be formed at a desired height.

Furthermore, a melted layer 32 of the flux 3 which is melted into glass by the laser beam is formed in the layer of the flux 3. This melted layer 32 is formed more thinly, as compared with the case where the laser beam has passed through the layer of the flux 3.

Fig. 5 is a schematic diagram illustrating the state of the flux through which the laser beam has passed. Fig. 6 is a cross sectional view illustrating the state of the flux in Fig. 5. Figs. 7 and 8 are pictures showing the state of the flux through which the laser beam has passed.
On the other hand, the solidified slag 31 is formed on the molten metal in the flux 3 through which the laser beam has not passed, in other words, in a region that is in contact with the penetration bead B, as shown in Figs. 5 and 6.

As shown in Figs. 5, 6, and 7, the solidified slag 31 contains bubbles 33 due to gas generated from the flux 3 when a laser beam has passed therethrough. Furthermore, the depth of the recess in the solidified slag 31 is deeper than a desired depth. In other words, the recess has a depth at which the penetration bead B can be formed higher than the desired height.

Furthermore, the melted layer 32 of the flux 3, which is melded by the laser beam, is formed in the layer of the flux 3. This melted layer 32 is formed more thickly, as compared with the case where the laser beam has not passed through the layer of the flux 3.

Since the above configuration prevents a penetrating laser beam from passing through the flux 3 and controls the melted flux thickness, the amount of gas generated from the flux 3 and so on can be controlled even if the laser beam irradiating the objects to be welded W penetrates the objects to be welded W to fall directly on the flux 3.
In other words, with the above configuration, the amount of the flux 3 heated or melted by the laser beam is controlled, as compared with the case where the laser beam penetrates the flux 3. This therefore controls the amount of the flux 3 that generates gas when heated, thus controlling the amount of gas generated. As a result, this can prevent generation of blowholes in the weld metal due to the gas, thereby preventing deterioration in quality.

On the other hand, since the particulate flux 3 and the hose 5 that expands when supplied with fluid are used, the flux 3 can be uniformly pushed against the objects to be welded W even if the weld line is long. As a result, deterioration in the quality of the welded portion, such as dripping of the penetration bead B and excessively convex shape of the penetration bead B, can be prevented

Furthermore, since the objects to be welded W are welded through the use of a laser beam, the quantity of heat applied to the objects to be welded W can be controlled, as compared with arc welding and so on. This can therefore control generation of thermal deformation of the objects to be welded W.

Furthermore, since the objects to be welded W are welded, with the flux 3 pushed against the back thereof, the objects to be welded W melted by the laser beam (that is, molten metal) are caught by the flux 3 even if the plate thicknesses of the objects to be welded W are large, thereby preventing it from dripping downward and the penetration bead B from becoming an excessively convex shape.
Even in the case where the gap G portion present in the flux 3 is welded, the molten metal is caught by the flux, thus allowing welding while adding a filler.

The flux 3 may be one containing thermosetting resin less than or equal to about 2 wt%, as in the above embodiment, or alternatively, the flux 3 may be one containing thermosetting resin from which gas is previously generated by preheating and is not particularly so limited.

More specifically, after the flux 3 is laid in the groove 21 of the penetration-bead holding apparatus 1, gas may be previously generated by preheating, or alternatively, after the flux 3 is preheated to generate gas, the flux 3 may be spread in the groove 21 of the penetration-bead holding apparatus 1 and is not particularly so limited.

The use of thermosetting resin from which gas is previously generated allows the amount of gas generated from the flux 3 to be controlled even if the flux 3 is heated during welding. This can therefore prevent generation of blowholes due to the gas in the weld metal, thereby preventing deterioration in quality.
Furthermore, even the flux 3 containing much thermosetting resin can be used in the penetration-bead holding apparatus 1 of this embodiment.

### {Second Embodiment}

Next, a second embodiment of the present invention will be described with reference to Figs. 9 to 12.
Although the basic configuration of the penetration-bead holding apparatus of this embodiment is similar to that of the first embodiment, the configuration in the vicinity of the layer of the flux differs from the first embodiment. Thus, the configuration around the flux will be described in this embodiment using Figs. 9 to 12, and descriptions of the other components and so on will be omitted.
Fig. 9 is a schematic diagram illustrating the configuration of the penetration-bead holding apparatus of this embodiment. Fig. 10 is a schematic diagram illustrating the placement positions of spacers in Fig. 9.
Components the same as those in the first embodiment are given the same reference signs and descriptions thereof will be omitted.

As shown in Figs. 9 and 10, a penetration-bead holding apparatus 101 includes the housing 2, the flux 3, the under-sand 4, the hose 5, and spacers (guiding sections) 107.

Fig. 11 is a schematic diagram illustrating the configuration of the spacers in Fig. 9.
The spacers 107 are cylindrical members made of metal or resin, as shown in Fig. 11, which guide gas generated from the flux heated by the heat of a laser beam to the unheated region of the flux.

As shown in Fig. 9, the spacers 107 are disposed between the flux 3 and the objects to be welded W in a state in which they are embedded in the flux 3. The spacers 107 are disposed in an orientation in which the central axis of the cylinder intersects the extending direction of the penetration bead B, more preferably, in a direction perpendicular thereto.

Furthermore, as shown in Figs. 9 and 10, the spacers 107 are disposed at both sides of the objects to be welded W, with the penetration bead B therebetween, and are disposed along the penetration bead B or the weld line, with a certain distance therebetween.

Since laser welding using the above-configured penetration-bead holding apparatus 101 is the same as that of the first embodiment, a description thereof will be omitted.

With the above configuration, gas generated from the heated flux 3 is guided to the unheated region of the flux 3 through the spacers 107. Since the unheated flux 3 has not been burned into glass, it serves as an escape route of the gas, thus suppressing the occurrence of problems, such as blowholes.

Fig. 12 is a schematic diagram illustrating another embodiment of the spacer in Fig. 11.
The cylindrical spacers 107 may be used as in the above embodiment, or alternatively, semicylindrical spacers (guiding sections) 107A may be used, as shown in Fig. 12, and it is not particularly so limited.

### {Third Embodiment}

Next, a third embodiment of the present invention will be described with reference to Figs. 13 to 15.
Although the basic configuration of the penetration-bead holding apparatus of this embodiment is similar to that of the first embodiment, the configuration between the flux and the hose differs from the first embodiment. Thus, only the configuration between the flux and the hose will be described in this embodiment using Figs. 13 to 15, and descriptions of the other components and so on will be omitted.
Fig. 13 is a schematic diagram illustrating the configuration of the penetration-bead holding apparatus of this embodiment.
Components the same as those in the first embodiment are given the same reference signs and descriptions thereof will be omitted.

As shown in Fig. 13, a penetration-bead holding apparatus 201 includes the housing 2, the flux 3, the under-sand 4, the hose 5, and a thin metal plate (shielding section) 207.

The thin metal plate 207 prevents damage to the hose 5 due to a laser beam and prevents transmission of a laser beam.
The thin metal plate 207 is a metal plate disposed so as to cover the top of the hose 5 and disposed inside the under-sand 4 in the vicinity of the hose 5 and may be either arcshaped or planar shaped in cross section, as shown in Fig. 13.

Since laser welding using the above-configured penetration-bead holding apparatus 101 is the same as that of the first embodiment, a description thereof will be omitted.

The above configuration can prevent the hose 5 from being irradiated with the laser beam. In particular, if a driving unit or the like that moves the laser beam and the objects to be welded W relative to each other fails, the laser beam may continue to irradiate the same portion. In such a case, this configuration can prevent the laser beam, that has penetrated the objects to be welded W and the flux 3, from irradiating the hose 5.
This allows the hose 5 to continue to press the flux 3 against the objects to be welded W, thus allowing formation of the stable penetration bead B.

Fig. 14 is a schematic diagram illustrating another example of the penetration-bead holding apparatus in Fig. 13.
Damage to the hose 5 due to a laser beam may be prevented using either the thin metal plate 207, as in the above embodiment, or a ceramic plate (shielding section) 207A instead of the thin metal plate 207, as shown in Fig. 14, and is not particularly so limited.

The ceramic plate 207A is a planar plate formed of ceramic so as to cover the top of the hose 5 and is disposed inside the under-sand 4 in the vicinity of the hose 5.

Fig. 15 is a schematic diagram illustrating yet another example of the penetration-bead holding apparatus in Fig. 13.
Damage to the hose 5 due to a laser beam may be prevented using either the thin metal plate 207, as in the above embodiment, or a particulate shield (shielding section) 207B instead of the thin metal plate 207, as shown in Fig. 15, and is not particularly so limited.

The particulate shield 207B is a particulate substance formed of polytetrafluoroethylene (Teflon (a registered trademark)), which is laid between the hose 5 and the under-sand 4 to form a layer.

Furthermore, either a layer formed of the under-sand 4 may be formed between the hose 5 and the flux 3, as in the embodiments described above, or a layer formed of the flux 3 may be formed directly on the hose 5, and is not particularly so limited.

### {Reference Signs List}

- 1, 101, 201: penetration-bead holding apparatus (laser welding apparatus)
- 3: flux
- 4: under-sand (supporting section)
- 5: hose (pushing section)
- 107, 107A: spacer (guiding section)
- 207: thin metal plate (shielding section)
- 207A: ceramic plate (shielding section)
- 207B: particulate shield (shielding section)
- W: object to be welded

## Claims

1. A laser welding apparatus comprising:
a particulate flux that is pressed against a first side of objects to be welded, which a laser beam irradiates from a second side; and
a pushing section that expands by receiving a fluid supplied to push the flux toward the first side of the objects to be welded,
wherein the laser beam that has penetrated the objects to be welded does not pass through the flux.

2. The laser welding apparatus according to Claim 1, wherein the flux does not contain thermosetting resin or contain the thermosetting resin at less than or equal to about 2 wt%.

3. The laser welding apparatus according to Claim 1, wherein the flux contains thermosetting resin that has already been made to generate gas in advance.

4. The laser welding apparatus according to any of Claims 1 to 3, comprising a guiding section that guides gas generated from the flux heated by the heat of the laser beam to an unheated region of the flux.

5. The laser welding apparatus according to any of Claims 1 to 4, comprising a shielding section, between the pushing section and the flux, that blocks the laser beam.

6. The laser welding apparatus according to any of Claims 1 to 5, comprising a supporting section, between the pushing section and the flux, that is a group of particulate substances and that supports the backing flux.

7. A laser welding method comprising:
a placement step of placing objects to be welded on the laser welding apparatus according to any of Claims 1 to 6;
a pressing step of pressing the flux against the objects to be welded by supplying fluid to the pressing section; and
a welding step of welding the objects to be welded by radiating a laser beam thereto.

8. A laser welding method comprising:
a placement step of placing objects to be welded on a particulate flux;
a pressing step of pressing the flux against the objects to be welded; and
a welding step of performing welding while controlling melting of the flux due to the laser beam that has penetrated the objects to be welded when the laser beam irradiates the objects to be welded.
